# EUROPEAN PATENT SPECIFICATION

(11) **EP 3 100 832 B1**
(45) Date of publication and mention of the grant of the patent: **22.05.2019**
(21) Application number: 16166173.1
(22) Date of filing: 20.04.2016
(51) Int. Cl.: B25J 15/04, B25J 15/00, B25J 11/00

(54) **SYSTEM ADAPTED TO A ROBOT FOR HANDLING BULKY OBJECTS**
AN EINEN ROBOTER ZUR HANDHABUNG VON SPERRIGEN OBJEKTEN ANGEPASSTES SYSTEM
SYSTÈME CONÇU POUR UN ROBOT DE MANUTENTION D'OBJETS VOLUMINEUX

(30) Priority: 03.06.2015 ES 201530782
(43) Date of publication of application: 07.12.2016
(73) Proprietor: Proytecsa Security, S.L., 22500 Binefar (Huesca) (ES)
(72) Inventor: SALLEN ROSELLO, Cesar, 22500 Binefar (Huesca) (ES); TORRES PUEO, Roberto, 22500 Binefar (Huesca) (ES)
(74) Representative: Ungria López, Javier

(56) References cited:
- WO-A1-2005/035204
- WO-A1-2015/075283
- JP-U- S5 091 278
- US-A1- 2010 164 243
- US-A1- 2013 268 118

## Description

### OBJECT OF THE INVENTION

As expressed in the title of this specification, the following invention refers to a system adapted to a robot for handling bulky objects, said system, based on a pair of telescopic arms, being essentially aimed at enabling robots used in risky operations, such as disrupting explosives, to handle bulky objects that could not be handled with the pliers carried in the free end of its articulated arm.

Thus, the system will especially allow for handling objects and containers with a generally cylindrical shape.

In addition, the first section of the pair of telescopic arms for anchoring to the related pliers' jaw features a slant according to a vertical and horizontal plane, which, by being interchangeable, facilitate the handling of a greater number of objects, depending on whether the articulated arm of the robot is in horizontal or vertical position.

### FIELD OF APPLICATION

The present report describes a system adapted to a robot for handling bulky objects, especially applied for adapting robots used in risky operations, such as handling suspicious artifacts and disrupting explosives.

### BACKGROUND OF THE INVENTION

As it is known, the robots used in risky operations, such as handling and disrupting explosive charges, feature an articulated arm ending in pliers by means of which they handle the detected suspicious objects.
In this way, the composition of the pliers itself only allows for the handling of small objects or those with some grippingmeans, such as a backpack or the like.

For said purpose, the aim has been to provide the pliers with certain characteristics that improve their use and, thus, the document P201331685 refers to a "*remotely-*controlled *robotised vehicle*"*,* whose essential feature is to provide the vehicle with two articulated arms ending in the related pliers, allowing for a first pair of pliers of a first arm to hold an object and for a second pair of pliers of the second arm to examine the object, both pliers being provided with endless rotation.

In addition, a first pair of pliers is provided with a pressure sensor, associated to the supply of pressure flow, being able to regulate and know the exact force exerted on the object to be handled, whereas the force or pressure exerted by the second pair of pliers is controlled by the motor's electric current control activating it.

Furthermore, the first pair of pliers of the first articulated arm is provided with short-path mechanical articulations on its ends which, associated to inner springs or spring elements thereof, are to withstand the pressure exerted on the object to be handled, since they are light, such that the above-mentioned inner springs or spring elements are connected to distance electronic sensors.

To summarize, bulky objects cannot be handled with the pliers provided to the robots used for the handling of suspicious artifacts.

### DESCRIPTION OF THE INVENTION

With the aim of resolving the above-mentioned problems, the present specification describes a system suitable to be adapted to a robot featuring an articulated arm ending in pliers, such that for each of the jaws forming the pliers, the system comprises an arm fixed to said jaw, said arm being constituted by:
✔ a first section and a second L-shaped section which are telescopic with each other;
✔ the first section, at its free end, is attached to the related pliers' jaw, and;
✔ an object-gripping body is joined at the free end of the second L-shaped section by means of a hinge joint.
allowing for the first section, composing the telescopic arm, to be attached to one pliers' jaw or the other interchangeably by means of a body for anchoring said first section to a corresponding jaw of the pliers. According to the invention, the first section of each arm comprises a slant relative to a plane of the body and relative to a median plane of the body, so that both first sections are mounted in a divergent position with respect to each other. The position of the section is perpendicular to the body (10) for anchoring, thus allowing for gripping objects of different sizes.

In addition, in a practical execution of the invention, the first section and second section composing the telescopic arms feature a quadrangular general section, although they may have any other section, such as circular.

The object-gripping body features a rectangular general section with curved-concave sides, being fixed to the hinge joint of the arm at the central part of one of its sides, insofar as the free opposite side, for gripping objects, features a general curved-concave surface.

The object-gripping body is positioned, due to gravity, in the object-gripping position.

To complement the description below, and in order that the characteristics of the invention may more readily be understood, this descriptive report is accompanied by a set of drawings in which, for illustrative and not restrictive purposes, the following has been represented.

### BRIEF DESCRIPTION OF THE DESIGNS

Figure 1 shows a side elevation view of a robot to which the system based on pliers for the handling of bulky objects has been adapted, wherein it is possible to observe how the second telescopic section is, practically, in a position horizontal to the pliers.
Figure 2 shows a plane view of the robot of the previous drawing, to which the system based on a pair of arms for the handling of bulky has been adapted, wherein it is possible to observe how the pliers of the robot is in the "open" position.
Figure 3 shows a front view of Figure 1.
Figure 4 shows a side elevation view of a robot to which the system based on pliers for the handling of bulky objects has been adapted, and wherein the pliers' jaws of the first section of the arms have been exchanged, according to the representation of Figure 1, wherein it is possible to observe how the second telescopic section is, practically, in a position perpendicular to the pliers.
Figure 5 shows a plane view of the previous figure.

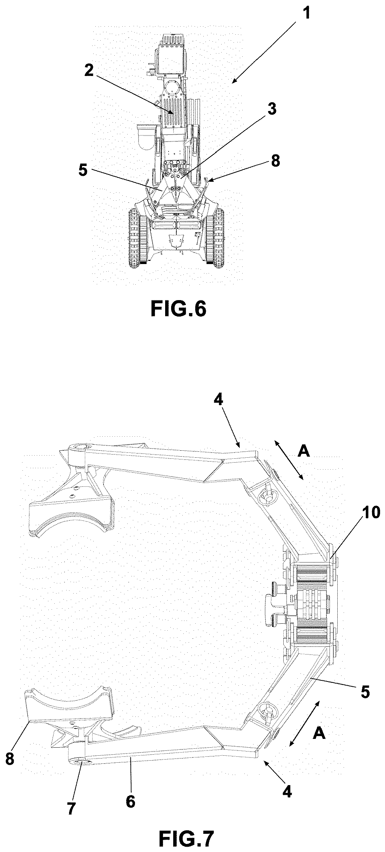

Figure 6 shows a front view of Figure 4.
Figure 7 shows a view of the pair of arms coupled to the related pliers, wherein it is possible to observe the junction of both sections composing it, as well as the gripping bodies attached thereto through a hinge joint.

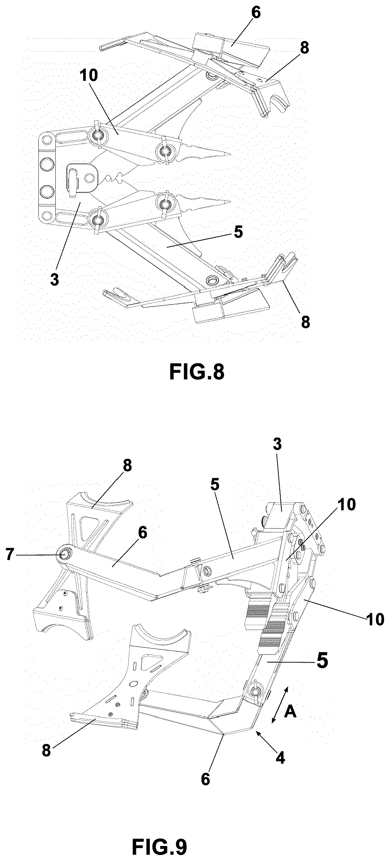

Figure 8 shows a bottom plane view wherein it is observed how the arms are anchored to the pliers' jaws by means of U-shaped bodies which embrace them from the outside and are anchored by means of a pair of pins.
Figure 9 shows a perspective view of the junction of the arms to the pliers' jaws, as well as the junction between them and the related object-gripping bodies.

### DESCRIPTION OF A PREFERRED EMBODIMENT

In view of the above-mentioned figures and according to the numbering adopted, we may observe how, departing from a conventional robot 1 of the type used in risky operations, featuring an articulated arm 2 ending in a pair of pliers 3, with a 360 degree rotation, attempts have been made to adapt in each of the jaws composing the pliers 3 an arm 4, composed of a first section 5 and a second section 6, both telescopic with each other, such that the first section 5 is fixed, at its free end, to the related jaw of the pliers 3, and an object-gripping body 8 is joined to the second section 6 at its free end by means of a hinge joint 7.

In this way, firstly, the length of the arms 4, constituted by a first section 5 and a second section 6, both telescopic, may be adjusted depending on the object to be handled.

In addition, the first section 5 composing the arms 4, relative to the body 10 for anchoring to the related jaw of pliers 3 features a slant according to a horizontal and vertical plane, being mounted in a divergent position with respect to each other. The above-mentioned anchoring body 10 is defined by a U-shaped body that embraces the related jaw of the mounting pliers and is anchored by a pair of pins.

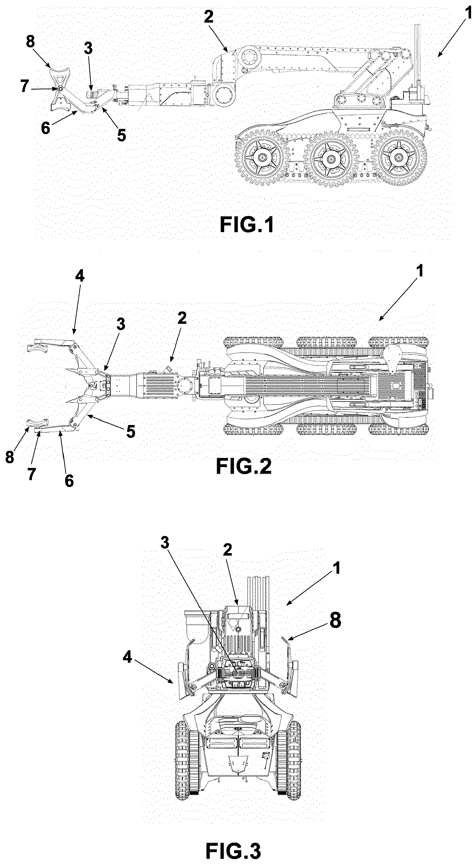

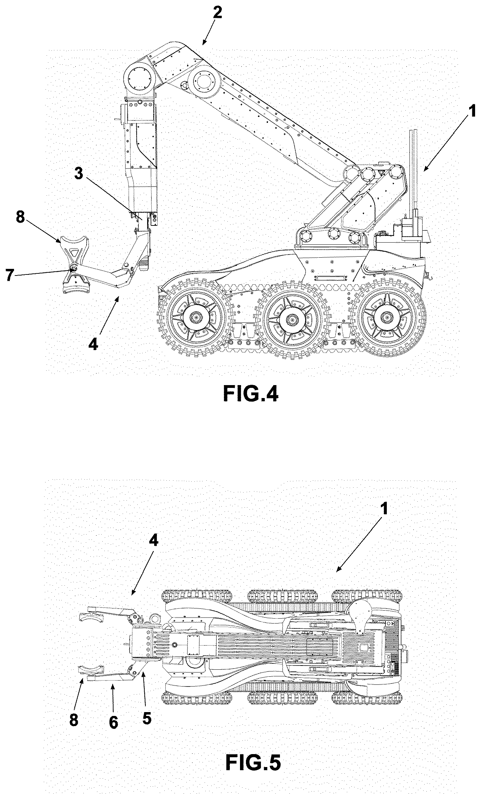

In addition, the first section 5, composing the arms 4, as it is rigidly fixed to the body 10 for anchoring to the jaw of the pliers 3, features a slant with respect to a horizontal and vertical plane, as is clearly observed in the figures and, in particular, in Figures 1 and 4, such that by being interchangeable, with respect to the jaws of the pliers 3, they may adopt two relative positions, and by coupling the second telescopic section 6, the position of said section with respect to the pair of pliers 3 makes it remain in a position practically horizontal or perpendicular thereto.

Thus, in Figure 1 of the designs it may be observed how, with the end of the articulated arm 2 in horizontal position towards the front, the first section 5 of the arms 4 is mounted such that they extend diverging according to a lower plane with respect to the pliers 3 and upon coupling the second telescopic section 6, the gripping bodies 8 are arranged in front of the pliers 3, whereas according to Figure 4 of the designs, being the end of the articulated arm 2 in vertical position downwards, and upon exchanging the first section 5 composing the arms 4 with respect to the pliers' jaws, said first sections 5 are mounted such that they extend diverging outwards and, upon coupling the second telescopic section 6, said section is maintained practically in perpendicular position to the pliers 3.

In this way, it may be observed how the first section 5 composing the arms 4 may be mounted, interchangeably, on both jaws of the pliers 3 but, depending on whether they are mounted on one jaw of the pliers 3 or the other, the relative position of the object-gripping bodies 8 is different with regards to the longitudinal axis of the above-mentioned pliers 3.

In a practical execution, the object-gripping body 8 features a rectangular general shape with curved-concave sides, being fixed to the hinge joint 7 joining the arm at the central part of one of its sides, while the opposite free side features a curved-concave surface.

Therefore, the object-gripping body 8 is positioned, by gravity, in an object-gripping position, thus enabling the gripping of said objects at, at least, three points of contact.

According to a practical execution, the first and second telescopic sections, composing each one of the arms, feature a quadrangular general section, although they may feature other sections such as, for example, a rounded one.

## Claims

1. A system suitable to be adapted to a robot featuring an articulated arm ending in pliers, the system comprising, for each of the jaws composing the pliers (3), an arm (4) fixed to said jaw, each arm (4) being constituted by:
✔ a first section (5) and a second section (6) telescopic with each other;
✔ the free end of the first section (5) being attached to the corresponding jaw of the pliers (3), and;
✔ an object-gripping body (8) being joined to the free end of the second section (6) by means of a hinge joint (7), the system being **characterized in that** the first section (5) composing the telescopic arm (4) has the capacity to be attached to any of the jaws of the pliers (3) interchangeably by means of a body (10) for anchoring said first section (5) to the corresponding jaw of the pliers (3); the first section (5) features a slant according to the body (10) for anchoring so that both first sections (5) are mounted in a divergent position with respect to each other; and **in that** the position of the second section (6) is perpendicular to the body (10).

2. A system according to claim 1, **characterized in that** the first section (5) and the second section (6), both telescopic, composing each of the arms (4), feature a quadrangular general section.

3. A system according to claim 1, **characterized in that** the object-gripping body (8) features a rectangular general shape with curved-concave sides, the object-gripping body (8) being attached to the arm (4) by means of the hinge joint (7) at the central part of one of its sides, while the free opposite side features a curve-concave surface.

4. A system according to claims 1 and 2, **characterised in that** the object-gripping body is positioned, by gravity, in an object-gripping position at, at least, three points of contact.

## Patentansprüche

1. System, das geeignet ist, an einen Roboter angepasst zu werden, der einen Gelenkarm aufweist, der in einer Zange mündet, wobei das System für jede der Klauen, die die Zange (3) bilden, einen an der Klaue befestigten Arm (4) aufweist, wobei jeder Arm (4) gebildet ist durch:
einen ersten Abschnitt (5) und einen zweiten Abschnitt (6), die zueinander teleskopisch sind;
wobei das freie Ende des ersten Abschnitts (5) an der entsprechenden Klaue der Zange (3) angebracht ist, und
eine objektgreifende Komponente (8), die mit dem freien Ende des zweiten Abschnitts (6) mittels eines Scharniergelenks (7) verbunden ist,
wobei das System **dadurch gekennzeichnet ist, dass**
der erste Abschnitt (5), der den Teleskoparm (4) bildet, die Fähigkeit hat, an jeder der Klauen der Zange (3) austauschbar mittels einer Komponente (10) zur Verankerung des ersten Abschnitts (5) an der entsprechenden Klaue der Zange (3) befestigt zu werden;
der erste Abschnitt (5) eine Schräge entsprechend der Komponente (10) zur Verankerung derart aufweist, dass beide Abschnitte (5) in einer auseinanderlaufenden Stellung in Bezug zueinander montiert sind; und
die Stellung des zweiten Abschnitts (6) senkrecht zu der Komponente (10) ist.

2. System nach Anspruch 1, **dadurch gekennzeichnet, dass** der erste Abschnitt (5) und der zweite Abschnitt (6), die beide teleskopisch sind und jeweils die Arme (4) bilden, generell einen quadratischen Querschnitt haben.

3. System nach Anspruch 1, **dadurch gekennzeichnet, dass** die objektgreifende Komponente (8) eine generelle rechteckige Form mit gekrümmten konkaven Seiten hat, wobei die objektgreifende Komponente (8) mittels des Scharniergelenks (7) an dem zentralen Teil einer ihrer Seiten an dem Arm (4) angebracht ist, wobei die freie gegenüberliegende Seite eine gekrümmte konkave Oberfläche hat.

4. System nach Anspruch 1 und 2, **dadurch gekennzeichnet, dass** die objektgreifende Komponente an einer objektgreifenden Position durch Schwerkraft an mindestens drei Kontaktpunkten positioniert ist.

## Revendications

1. Système approprié pour être adapté à un robot présentant un bras articulé se terminant en pince, le système comprenant, pour chacune des mâchoires constituant la pince (3),
un bras (4) fixé à ladite mâchoire,
chaque bras (4) étant constitué :
✔ d'une première section (5) et d'une seconde section (6) télescopiques l'une avec l'autre ;
✔ l'extrémité libre de la première section (5) étant attachée à la mâchoire correspondante de la pince (3), et ;
✔ un corps de préhension d'objet (8) étant relié à l'extrémité libre de la seconde section (6) au moyen d'une jonction articulée (7),
le système étant **caractérisé en ce que**
la première section (5) constituant le bras télescopique (4) a la capacité d'être attachée à n'importe laquelle des mâchoires de la pince (3) de manière interchangeable au moyen d'un corps (10) pour ancrer ladite première section (5) à la mâchoire correspondante de la pince (3) ;
la première section (5) présente une inclinaison par rapport au corps (10) en vue d'un ancrage de sorte que les deux premières sections (5) soient montées dans une position divergente l'une par rapport à l'autre ; et **en ce que**
la position de la seconde section (6) est perpendiculaire au corps (10).

2. Système selon la revendication 1,
**caractérisé en ce que** la première section (5) et la seconde section (6), toutes les deux télescopiques, constituant chacune des bras (4), présentent une section générale quadrangulaire.

3. Système selon la revendication 1,
**caractérisé en ce que** le corps de préhension d'objet (8) présente une forme générale rectangulaire avec des côtés concaves incurvés, le corps de préhension d'objet (8) étant attaché au bras (4) au moyen de la jonction articulée (7) au niveau de la partie centrale d'un de ses côtés, tandis que le côté opposé libre présente une surface concave courbe.

4. Système selon la revendication 1 et 2,
**caractérisé en ce que** le corps de préhension d'objet est positionné, par gravité, dans une position de préhension d'objet à, au moins, trois points de contact.
